# EUROPEAN PATENT APPLICATION

(11) **EP 3 388 806 A1**
(43) Date of publication of application: **17.10.2018**
(21) Application number: 18166601.7
(22) Date of filing: 10.04.2018
(51) Int. Cl.: G01L 1/12, G01L 3/10

(54) **CIRCUMFERENTIAL FORCE MEASURING DEVICE**

(30) Priority: 11.04.2017 EP 17166054
(71) Applicant: Torque and More (TAM) GmbH, 82319 Starnberg (DE)
(72) Inventor: MAY, Lutz, 82319 Starnberg (DE)
(74) Representative: LKGLOBAL Lorenz & Kopf PartG mbB Patentanwälte

(57) **Abstract**

A force measuring device (50) is disclosed that comprises a magnetic field generating unit (100) with a first magnetic field generator (110), a first magnetic field sensing unit (210), a second magnetic field sensing unit (220) with a first sensing coil (222), and a control unit (60) configured to determine a force applied to a test object (10) based on sensed signals of the first magnetic field sensing unit (210) and the second magnetic field sensing unit (220). The first magnetic field generator and the first and second sensing units are arranged so that they circumferentially surround the test object.

## Description

### Background of the Invention

The present invention relates to a force measuring device and a force measuring arrangement. Particularly, the invention relates to a magnetic based force measuring device for measuring a force applied to an object allowing force measuring without the need of pre-processing the object.

### Field of the Invention

Force measuring is important for many industrial applications, in particular for arrangements being dynamically impacted by a force. Applied forces may be compressive forces as well as moments like torque and bending impacts. An exemplary application for torque is a shaft for a vehicle being arranged between a motor and, e.g., a wheel. For determining a torque in the shaft, either a particular element needs to be mounted to the shaft, or the shaft needs to be pre-processed, e.g., magnetized. Mounting elements to a shaft may influence the movement of the shaft, pre-processing may be difficult when the shaft is not accessible or cannot me dismounted for pre-processing.

Non-contact magnetic principle based force measurement devices are known from EP 3 250 985 A1 and WO 2016/119931 A1, for example. These documents describe a sensor that is placed laterally with respect to the test object and close to a surface of the test object.

### Summary of the Invention

It may be seen as an object of the present invention to reduce the influence of rotational non-uniformity of a shaft to a measurement signal acquired by a non-contact magnetic principle based sensor.

This object is solved by the subject matter of the independent claims, further embodiments are incorporated in the dependent claims and in the following description.

According to a first aspect, a force measuring device is provided. The force measuring device comprises a magnetic field generating unit with a first magnetic field generator, a first magnetic field sensing unit, a second magnetic field sensing unit with a first sensing coil, and a control unit that is configured to determine a force applied to a test object based on sensed signals of the first magnetic field sensing unit and the second magnetic field sensing unit. The magnetic field generating unit is configured to generate a magnetic field and to apply the magnetic field to the test object. The first magnetic field sensing unit is configured to sense the generated magnetic field and to provide the sensed signal to the control unit. The first magnetic field generator, the first magnetic field sensing unit, and the first sensing coil surround a common central axis. The first magnetic field sensing unit is longitudinally offset with regard to the first magnetic field generator. The first sensing coil is wound around the first magnetic field generator such that the first sensing coil and the first magnetic field generator are arranged coaxially with respect to the common central axis. The second magnetic field sensing unit is configured to sense a carrier signal of the magnetic field generating unit and to provide the sensed carrier signal to the control unit. The control unit is configured to subtract the carrier signal sensed by the second magnetic field sensing unit from the signal sensed by the first magnetic field sensing unit for determining the force applied to the test object.

The force measuring device described herein is insensitive to rotational non-uniformity of the test object because the elements of the device, i.e., the magnetic field generating unit and the first and second magnetic field sensing units, surround the test object. Especially, the force measuring device is not just placed laterally close to the test object from one certain direction but surrounds the test object.

The test object might be a symmetrically shaped shaft with a circular cross-section and made of ferro-magnetic material or electrically conductive material.

In one embodiment, the first magnetic field sensing unit is spaced apart from the first magnetic field generator in a longitudinal direction of the test object.

In a further embodiment, the magnetic field generating unit comprises a second magnetic field generator, and the first magnetic field generator and the second magnetic field generator are spaced apart from each other in a longitudinal direction of the central axis. The first magnetic field sensing unit is longitudinally offset with regard to and spaced apart from the second magnetic field generator.

By placing two magnetic field generators around the test object, side-by-side with some spacing between them, at the location where measurements have to be taken from, a section between the magnetic field generators will be created where the generated magnetic flux lines run equally spaced in parallel to the main axis or central longitudinal axis of the test object.

The magnetic field generators may be inductors or coils that are wound around the test object. The first and second magnetic field generators may be identically or similarly designed coils, e.g., the same number of windings, same wire cross section, etc.

In a further embodiment, the first magnetic field sensing unit is arranged between the first magnetic field generator and the second magnetic field generator.

Placing the magnetic field sensing unit between the two magnetic field generators may allow to measure the effects when the test object is exposed to mechanical stresses (like torque forces).

In a further embodiment, the second magnetic field sensing unit comprises a second sensing coil and the second sensing coil is wound around the second magnetic field generator such that the second sensing coil and the second magnetic field generator are arranged coaxially with respect to the common central axis.

The first sensing coil and the second sensing coil may be coils with the same number of turns and may be connected in series.

With this design the sum of the detected (measured) signal at the output of the second magnetic field sensing unit is nearly insensitive to ferromagnetic objects that may come close from the side onto the sensor arrangement.

In a further embodiment, the first magnetic field generator and the second magnetic field generator are equally designed inductors. The first magnetic field generator and the second magnetic field generator may be equally designed coils having the same number of windings or turns with the same inductance.

In a further embodiment, the first magnetic field generator and the second magnetic field generator are identical coils with their central axes coinciding. A central axis of a coil is perpendicular to a winding plane or a plane spanned by the windings of a coil and may extend through a symmetry point (centre point) of a coil.

In a further embodiment, the first magnetic field generator and the second magnetic field generator are connected in series and are configured to be driven by the control unit with an alternating current, AC, signal.

In a further embodiment, the first magnetic field sensing unit is spaced apart equally from the first magnetic field generator and the second magnetic field generator.

In a further embodiment, a width of the first sensing coil is equal to a width of the first magnetic field generator such that the first sensing coil completely overlaps or covers the first magnetic field generator without, at the same time, overhanging the first magnetic field generator in longitudinal direction.

A width of the second sensing coil may be equal to or less than a width of the second magnetic field generator.

The width of the first sensing coil may be a thickness or an extension in the longitudinal direction.

In a further embodiment, the first sensing coil is wound onto the first magnetic field generator. Furthermore, the second sensing coil may be wound onto the second magnetic field generator.

In a further embodiment, a number of turns of the second magnetic field sensing unit which is a sum of the turns of its coils, is less than a number of turns of the first magnetic field sensing unit.

In a further embodiment, the force measuring device further comprises a casing with a first radial recess, a second radial recess, and a third radial recess, wherein the first magnetic field generator is arranged in the first radial recess, wherein the first magnetic field sensing unit is arranged in the second radial recess, and wherein the second magnetic field generator is arranged in the third radial recess.

In a further embodiment, the casing comprises or is made of an electrically non-conductive material, and/or non-ferromagnetic material, and/or plastics.

According to a further aspect, a force measuring arrangement is provided that comprises a test object and a force measuring device as described above and hereinafter, wherein the first magnetic field generator and the first magnetic field sensing unit encircle the test object and are spaced apart from a surface of the test object, wherein the test object is freely rotatable or static in relation to the force measuring device.

In other words, the test object is movable independently of the force measuring device. The force measuring device may surround the test object such that a small gap of a few millimetres exists between the surface of the test object and the force measuring device, its casing or coils. Especially, the force measuring device is fixedly held in its position while the test object is either static or can rotate freely in relation to the force measuring device.

In a further embodiment, the test object is a rotationally symmetric shaft, and the first magnetic field generator and the first magnetic field sensing unit are spaced apart from the surface of the test object along an entire circumference of the test object.

The characteristics of the force measuring device described herein may be summed up as follows:
The force measuring device is an active magnetic principle based mechanical force sensor solution that is not sensitive to some or all causes of rotational non-uniformity of a test object that might be referred to as Rotational Signal Uniformity (RSU) issues.

The force measuring device described herein works particularly when using ferromagnetic test objects. The force measuring device may work also when the test objects have been tooled from electric conductive materials and do not have ferromagnetic properties (in this case, the sensor physics may be based on the Eddy current principles).

A laterally arranged sensing module is placed from one side onto the test object (shaft). In contrast thereto, the force measuring device described herein is arranged circumferentially around the test object. When the test object rotates, the laterally arranged sensing module will look at differently sized areas (the size of the acquired or detected surface of the test object varies by a few square millimetres when the distance or gap between the sensor and the surface of the test object changes) of the surface of the test object until a full rotation has been completed. Any changes in the test object surface will cause also a change in the sensor signal output (like an offset shift and or signal gain changes) depending on the type of "changes" in the test object surface. The changes or variations during a rotation of the test object may be (incomplete list): air gap changes between the sensing module and the surface of the test object; alloy inhomogeneity within the test object (at the sensing region while the test object rotates); non-uniform hardening profile; accidentally (or wilfully) stored magnetic fields in the surface of the test object; non-uniform mechanical stress distribution (like local damages and local scratches).

### Brief description of the drawings

In the following, for further illustration and to provide a better understanding of the present invention, exemplary embodiments are described in more detail with reference to the enclosed drawings, in which
- Fig. 1: schematically shows a laterally arranged force measuring device with respect to a test object,
- Fig. 2: schematically shows a force measuring device according to an exemplary embodiment,
- Fig. 3: schematically shows a measurement signal of a force measuring device according to an exemplary embodiment,
- Fig. 4: schematically shows two magnetic field generating units wound around a test object,
- Fig. 5: schematically shows two magnetic field generating units wound around a test object,
- Fig. 6: schematically shows two magnetic field generating units wound around a test object,
- Fig. 7: schematically shows two magnetic field generating units and a magnetic field sensing unit wound around a test object,
- Fig. 8: schematically shows a force measuring device according to an exemplary embodiment,
- Fig. 9: schematically shows the functional elements of a force measuring device shown in Fig. 8 and according to a further exemplary embodiment,
- Fig. 10: schematically shows a force measuring device according to an exemplary embodiment,
- Fig. 11: schematically shows the output signal of a force measuring device according to an exemplary embodiment,
- Fig. 12: schematically shows the magnetic flux lines deflection by an external ferromagnetic object,
- Fig. 13: schematically shows a force measuring device according to an exemplary embodiment,
- Fig. 14: schematically shows a force measuring device according to an exemplary embodiment.

### Detailed description of exemplary embodiments

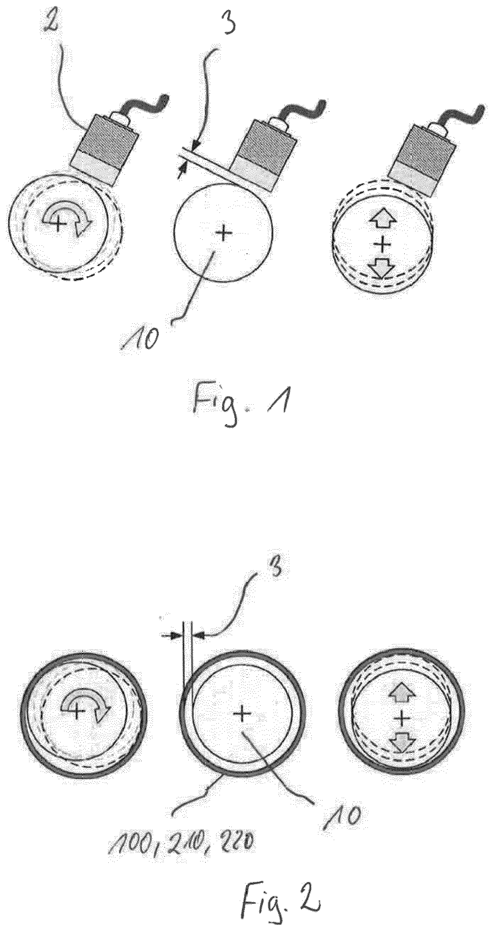

Fig. 1 shows a sensor 2 laterally arranged with respect to a test object 10. The sensor 2 is placed from the side onto the test object and is exposed to potential distance changes (changes of the distance between the sensor 2 and the surface of the test object, gap 3) caused by shaft vibration (schematically shown in the right picture) and shaft wobbles (non-centric shaft run, schematically shown in the left picture). Such an air gap change may have an impact onto the sensor measurement performance and measurement uniformity.

Any or all of these issues may cause that the measured mechanical force signal will change in offset and/or in signal slope (signal gain). The measured signal may not be uniform as a consequence of a 360-degree angle shaft rotation.

One possible solution to overcome this drawback is that the measured signal will be integrated over the time it takes until the shaft (test object) has completed a full 360-degree rotation. The sum of all measurements around a 360-degree rotation remains constant. However, this will not be possible when the test object stands still. For the signal integration process to work it requires that the test object is rotating at a known speed at all times.

An alternative possible solution to overcome the effect of rotational non-uniformity is shown in Fig. 2. Fig. 2 shows the basic principle of a force measuring device.

A magnetic field generating unit 100, first and second magnetic field sensing units 210, 220 are arranged to circumferentially surround the test object 10. On the left side, eccentric rotation of the test object 10 is show, in the middle, the test object is centric, and on the right, the test object vibrates vertically. However, in all of these scenarios, the test object is arranged and moves inside of the units 100, 210, 220. Even if the distance between the generating unit 100 or one of the sensing units 210, 220 decreases at one point, it increases at another point and these variations may compensate such that the measurement signal is constant while the test object stands still or rotates.

The sensor design solution described in this document is taking measurements simultaneously from the entire surface 360 degree around the test object. Thus, it does not matter if the test object is static or rotating at any speed. The measurement result is always the same.

The sensing module is wrapping around 360° the test object. The sum of all signals that are received by the sensing units 210, 220 (the magnetic carrier signal generated by the magnetic field generating unit 100 that has been modulated by the loaded or unloaded test object) remains constant, independent of the position (shape of the air gap, relative position between test object and sensing units) of the test object with respect to the sensing units 210, 220, as long as the test object extends through the circular sensing units.

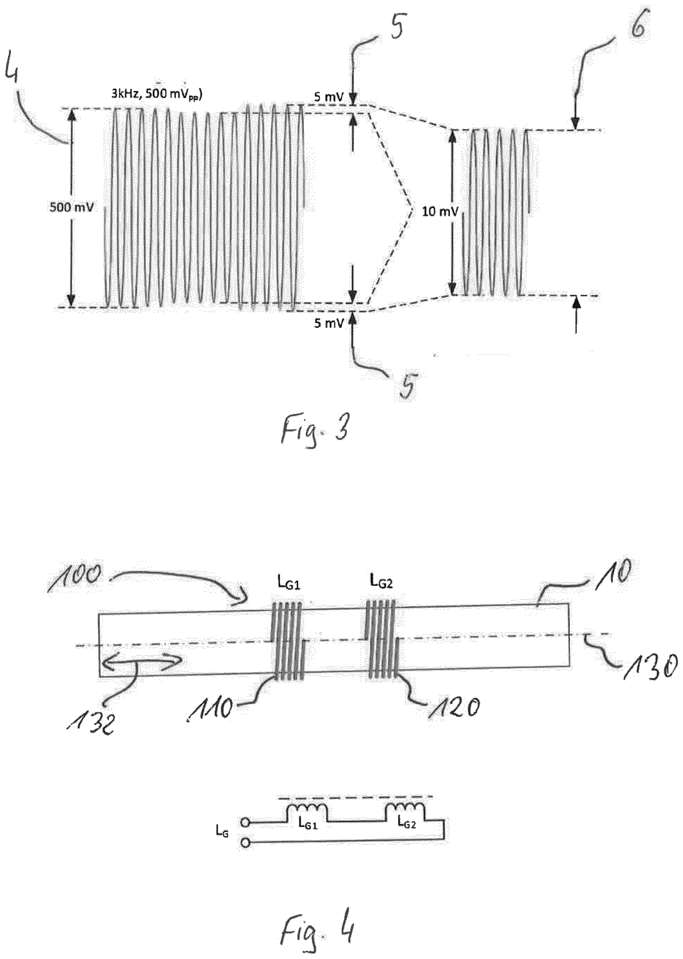

Fig. 3 schematically shows processing of the measurement signal that is provided by the magnetic field sensing units 210, 220.

Generally, the magnetic field generating unit generates a magnetic field. The magnetic flux lines run through the test object. A force applied to the test object will modulate the magnetic flux lines, e.g., change the direction the magnetic flux lines spread through the test object. This modulation can be detected by the sensing units and the measured signal is used as a reference value for the applied forces.

There are two fundamental ways the receiver signal processing may work (inside the control unit of the force measuring device) of a magnetic principle based active mechanical force sensor: signal amplitude modulation or signal phase comparison.

The following description will focus on the signal amplitude demodulation encoding concept. The alternating magnetic flux carrier signal transmitted to the surface of the test object will be influenced (modulated or manipulated) by the applied forces onto the test object. Under normal operational condition, the signal amplitude modulation of the transmitted carrier signal is in the area of 1.5% (this is a typical value only and may be different under exceptional conditions). Meaning that under optimal operating conditions, the receiver signal may change in its amplitude by a less than 2% of the amplitude of the carrier signal when the specified maximal mechanical forces are applied to the test object. In most real-world application cases (where mechanical overload conditions have to be avoided), the signal amplitude modulation may be far less than 1%.

Assuming that the alternating magnetic flux carrier signal 4 received by the sensing units is 500 mV (this is an example value only), then the maximum change of the signal amplitude is in the area of +/-10mV (modulation range 5 in Fig. 3, equivalent to 2% modulation level). These 10 mV represent then 100% of the targeted full-scale measurement range 6 of the mechanical force measuring device. Aiming for a sensor measurement resolution of 0.5% of the full-scale measurement range 6 would therefore mean that the control unit has to be capable to reliably recover signal amplitude changes of around (0.5% of the 10 mV full-scale signal) which is equivalent to 50 µV. This may be difficult to achieve when the absolute signal amplitude of the received sensor signal very much larger than the targeted signal modulation (in this example: 500 mV).

Any type of signal amplitude changes to the absolute received signal (the 500 mV carrier signal 4) will be interpreted as the result of the applied mechanical forces (applied to the test object), while in reality these changes may have been caused by different reasons (examples only): transmitter amplifier tolerances and changes of operational conditions to the amplifier; supply voltage changes; impedance changes of the sensor receiver caused by changes in the operating temperature; any type of signal noise, including interferences caused by EMI (electro-magnetic interferences); any signal amplitude changes caused by the property changes of the test object (alloy homogeneity, temperature effects, embedded magnetic fields).

However, there may be a need to build a reliable signal amplitude demodulation circuit (taking the design example from above) that can clearly differentiate between the targeted measurement signal (like caused by the applied mechanical forces torque or axial load) and changing signals caused by component tolerances and changes of the operational conditions. Most likely, the tolerances in the power supply voltage and/or the performance changes of the transmitter amplifier are much larger than the targeted measurement signal. The required common mode tejection capability is impractical to achieve with a "direct" or "straight-forward" signal processing approach.

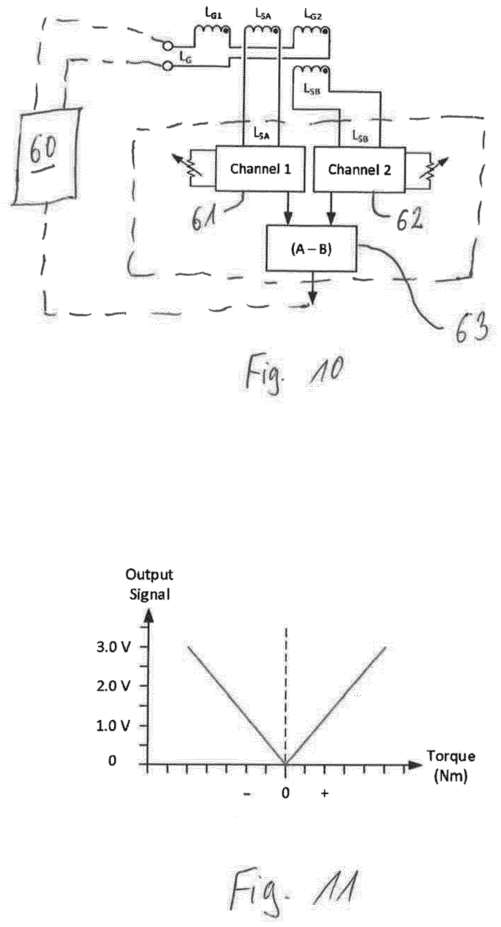

One way around this challenge is to apply a differential mode signal conditioning process. This will result in the cancellation of the carrier signal alltogether (in our example the 500 mV carrier signal 4) and leaving only the modulated signal (in our example the 10 mV full-scale measurement range signal 6) resulting in a very high common mode rejection capability. However, this may work only as long as the effect of the changes in the operating conditions effects both equally: the main measurement signal (here called "A") and the differential mode signal (here called "B"). In this example, the signal "B" will be subtracted from signal "A", leaving behind the modulated signal only (like in this example the 10 mV). This is described in more detail with respect to Fig. 10.

Figs. 4 to 8 show the principles of the structural design of the force measuring device.

Fig. 4 shows the first magnetic field generator 110 (also referred to as LG1) and the second magnetic field generator 120 (LG2) arranged such that they surround the test object 10. The first magnetic field generator 110 and the second magnetic field generator 120 are referred to as magnetic field generating unit 100 (commonly referred to as LG).

The first magnetic field generator 110 and the second magnetic field generator 120 are connected in series, as shown in the picture on the bottom of Fig. 4.

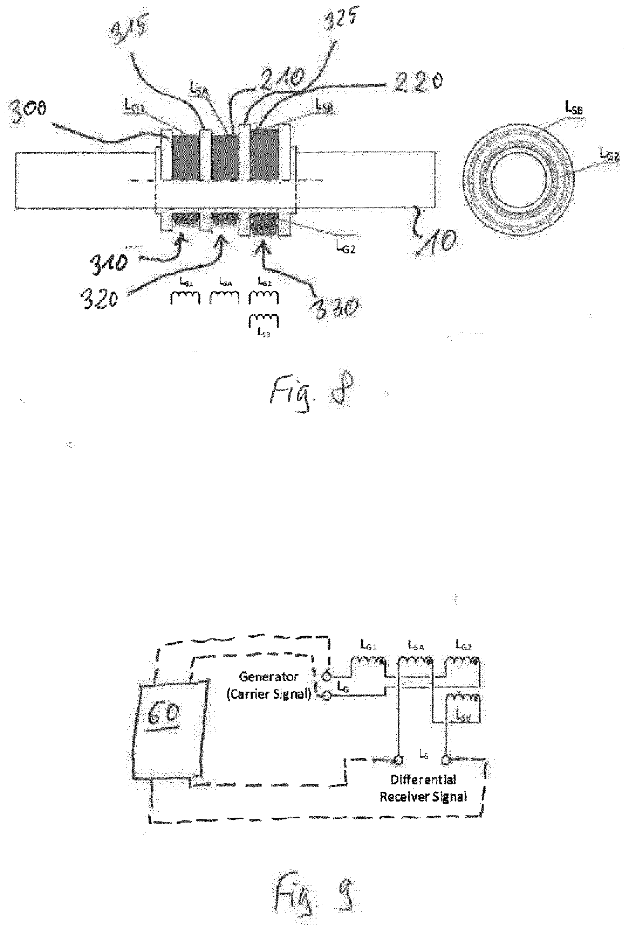

The test object 10 is a shaft that preferably is rotationally symmetric and has a circular cross section (see Fig. 8, front view on the right). The magnetic field generators 110, 120 circumferentially surround the test object such that a central axis 130 of the test object 10 is substantially perpendicular with respect to the windings of the coils LG1 and LG2. The central axis 130 extends in a longitudinal direction 132 of the text object.

Generally, the active sensing technology (that is applied by the force measuring device described herein) requires that a known magnetic field source ensures that magnetic flux lines (generated by direct or alternating current flowing through the coils LG1 and LG2) run in a predetermined direction through layers/sections of the test object at the sensing region. The sensing region might be the region between LG1 and LG2. The larger the magnetic flux density is, the lower is the risk of unwanted interferences from external signal sources. By placing two equally designed inductors/coils LG1 and LG2 around the test object, side-by-side with some spacing between them, at the location where measurements have to be taken from, a section between them will be created where the generated magnetic flux lines run equally spaced in parallel to the main axis of the symmetrical shaped test object 10.

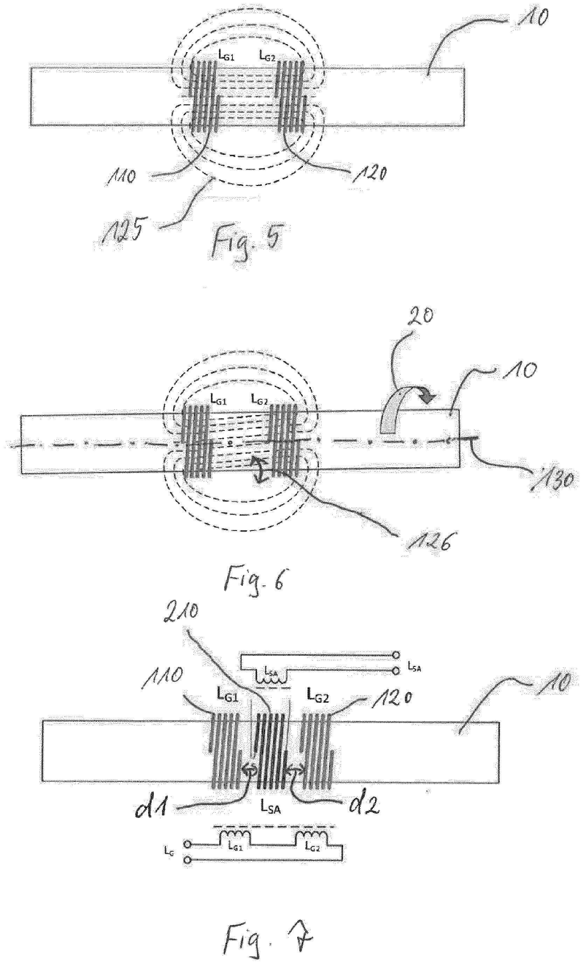

Fig. 5 schematically shows the magnetic flux lines 125 of the arrangement already shown in Fig. 4.

When no mechanical stresses are applied to the test object, the magnetic flux lines 125 that run inside of the test object 10 run in parallel to the central axis of the test object 10 between the two magnetic field generators 110, 120. In average, the penetration depth of the induced magnetic field (caused by the carrier signal) is in the area of several 10's of µm to maximal 1.5 mm, for example. This depends on the chosen carrier frequency and the electric power applied to the magnetic field generator.

Fig. 6 shows the effect of a torque force 20 applied to the test object 10. When mechanical stresses are applied to the test object 10 then this will have an impact on the path the magnetic flux lines 125 are taking inside the test object 10. There will be an angle 126 between the central axis 130 and the direction of the flux lines inside the test object. Fig. 6 shows the angular twisting of the magnetic flux lines (mainly at the surface of the test object) when torque forces are applied in one particular direction.

Fig. 7 shows a first magnetic field sensing unit 210 (LSA) placed between the first and second magnetic field generators 110, 120. The magnetic field sensing unit 210 might be a sensing coil.

Placing this sensing coil (LSA) between the two magnetic field generator coils LG1 and LG2 allows to measure the change effects in the magnetic flux when the test object is exposed to mechanical stresses (like torque forces). For example, to implement this particular signal recovery concept, an alternating current will be used to drive the field generator coils LG1 and LG2. The frequency of the alternating current may be (to a larger extent) somewhere in the audio frequency range (a few hundred Hz up to or well below 40 kHz).

The gaps d1 and d2 between LG1 and LSA on the one hand and LSA and LG2 on the other hand may be equal or substantially equal. The gaps d1, d2 relate to the respective distance in longitudinal direction.

Fig. 8 shows on the left a side and semi-cut view of the force measuring device, and on the right a front view of the same device.

On the left, the lower half of the force measuring device is cut off to schematically show the windings of the magnetic field generators and sensing units on the casing 300.

The force measuring device comprises a casing 300 that is placed so that the test object extends through a central opening of the casing. In other words, the casing 300 surrounds the test object 10 so that the test object 10 can freely rotate around its central axis or rotational axis while the casing and the force measuring device stands still.

The casing 300 has three radial recesses 310, 320, 330 arranged side by side in longitudinal direction of the test object. The radial recesses are separated in longitudinal direction by separating walls 315, 325. The recesses may have the same outer diameter. The outer diameter of the recesses corresponds to the outer surface within the recesses where the windings of LG1, LSA, and LG2 rest upon. Therefore, these elements have the same distance from the surface of the test object. In particular, the longitudinal width of the first and third radial recesses 310, 330 may be equal or substantially equal. The width of the second radial recess 320 may differ (may be larger or smaller) from the width of the first and third radial recesses but may also be the same.

The first magnetic field generator LG1 is arranged in the first radial recess 310. The first magnetic field sensing unit LSA is arranged in the second radial recess 320, i.e., between LG1 and LG2. In the third radial recess, LG2 and the second magnetic field sensing unit LSB are arranged.LG2 is wound about the casing radially inside of LSB. In other words, LSB circumferentially surrounds LG2. An electric isolation layer may be arranged between LG2 and LSB. This electric isolation layer may also have the function to provide a radial spacing or distance between LG2 and LSB. The isolation layer may be a ring, e.g., made of plastic. This ring may be placed around LG2 before LSB is wound upon the ring. In an alternative embodiment, LSB may be directly wound upon LG2 if the used wires for LSB and LG2 have a coating that provides electric isolation.

To achieve a differential mode signal conditioning processing solution, the second magnetic field sensing unit 220 LSB is provided so that a measurement only of the carrier signal can be taken. The objective is to measure the carrier signal unmodulated (not affected by any applied mechanical forces to the test object). However, for the differential signal processing to work, this second carrier signal measurement taken by LSB may include all the effects that will also effect the measurement from LSA: transmitter amplifier tolerances and changes of operational conditions to the amplifier; supply voltage changes; impedance changes of the sensor receiver caused by changes in the operating temperature; any type of signal noise, including interferences caused by EMI (electro-magnetic interferences); any signal amplitude changes caused by the property changes of the test object (alloy homogenity, temperature effects, embedded magnetic fields, for example).

The differential-mode sensing-coil LSB is placed on-top of one of the generator coils, either LG1 or LG2. Measurements have shown that the signal amplitude modulation (caused by mechanical forces) is very little at that place. It is very close to zero. Therefore, LSB includes all of the parasitic effects having an effect onto the measurement from LSA but will not be affected by the signal modulation caused by mechanical force changes.

The two signals (from LSA and from LSB) can be conditioned separately (two channel solution, see Fig. 10) or can be conditioned jointly (single channel solution, see Fig. 9). There are distinctive differences when choosing one or the other.

Fig. 9 shows a single channel solution for the signal processing of a force measuring device. The characteristics of this solution are: low complexity and low component count of the sensor electronics or control unit 60; the sensing coils LSA and LSB are designed to provide matching output signals; because of possible signal phase shifts, it may be difficult to reach absolute 0 Volt when 0 Nm Torque are applied to the test object; small output signal amplitude as the inductor LSB may dampen the measure torque signal (coming from LSA) to a certain extent.

The control unit 60 is configured to provide an electric signal to the magnetic field generating unit (LG1 + LG2) and to receive the signal sensed by the first and second magnetic field sensing unit LSA and LSB. Based on the received signal, a mechanical force applied to the test object is determined.

The signal received by LSA (also called signal A) consists of the carrier signal and the modulation of the carrier signal. The signal received by LSB (also called signal B) consists mainly of the carrier signal. Assuming that the carrier signal amplitude of signal A and of signal B is identical, the signal B is subtracted from the signal A. What remains are the signal amplitude modulation of the carrier signal only: (A - B) = targeted sensor signal (without any static portion of the carrier).

The differential mode signal approach may require that the carrier signal amplitude received (detected/measured) by the magnetic field sensing devices LSA and LSB have to be similar in amplitude when no torque forces are applied. The number of windings for the inductor LSB may be less than from the inductor LSA (the number of windings depend on several mechanical dimension factors and on the magnetic properties of the test object).

Fig. 10 shows a dual channel solution for the signal processing of a force measuring device. The characteristics of this solution are: the signals LSA and LSB do not have to be matching in amplitude as this can be corrected afterwards (in the signal conditioning circuit or control unit 60); signal phase differences (between channel 1 and channel 2) may be eliminated.

The signals LSA and LSB are demodulated and conditioned separately by demodulator and amplifiers 61, 62, respectively. This may allow a better matching of the two signals and it may also go around a potential challenge caused by small signal phase delays. The amplified and demodulated signals are provided to an adder or summer 63 that subtracts the signals A and B to eliminate the carrier signal and to obtain the signal of the full-scale measurement range 6 (see Fig. 3).

Elements 61, 62, 63 in the dashed box may be part of the control unit 60 or may be part of a pre-processing done by a distinct entity.

Fig. 11 shows the output signal of the force measuring device after further signal processing the amplitude demodulated signal. When no forces are applied to the test object then there will be no signal available at the receiver system: LSA - LSB = LS with LS being 0 Volt at zero torque.

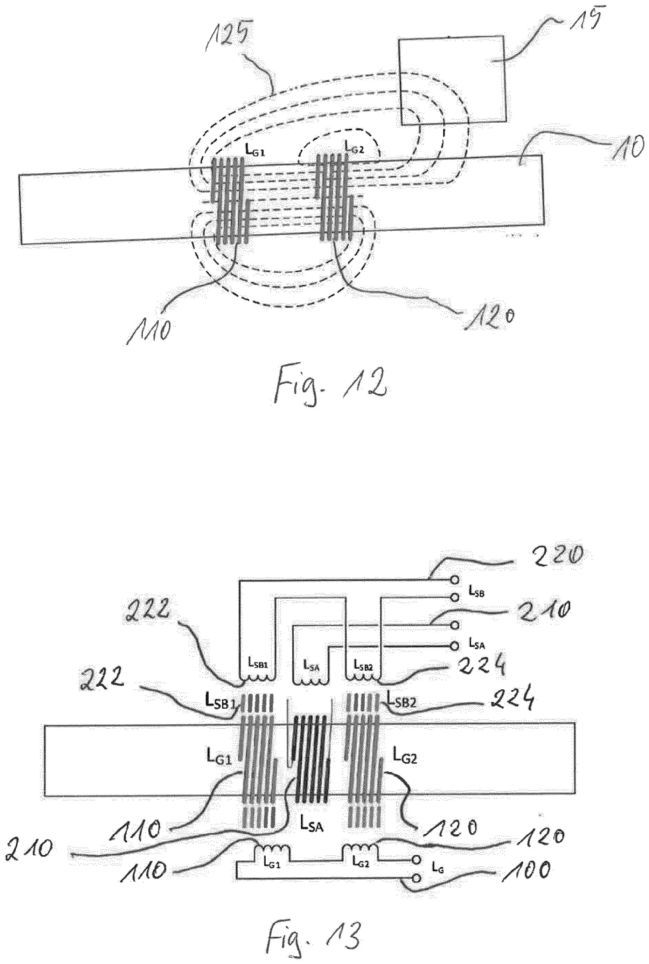

Fig. 12 schematically shows parasitic effects onto the force measurement which may be interference caused by ferro-magnetic objects in the vicinity of the force measuring device.

When a ferro-magnetic object 15 is coming near to the coil setup LG1 and LG2 then the magnetic flux line distribution 125 will be distorted, e.g., towards the interfering object 15. This field distortion has an impact on the absolute signal measured with the sensing coil LSB. The sensing coil LSB has been placed on-top of the magnetic field generator coil LG2, see Fig. 8. As the magnetic flux density increases around the magnetic field generator coil LG2, so will the signal amplitude of the sensing coil LSB. The amplitudes of the carrier signals in LSA and LSB are no longer identical in this specific case.

To deal with this effect, the second magnetic field sensing unit 220 (LSB) may be split in two coils: LSB = LSB1 and LSB2. Each of these coils will be placed on-top of the corresponding generator coils: LSB1 is placed (wound onto) on top of LG1 and LSB2 is placed (wound onto) on top of LG2, see Fig. 13.

Fig. 13 shows this design. The second magnetic field sensing unit LSB is split into two equally sized coils LSB1 222 and LSB2 224. These two coils are placed (wound around) on top of the two magnetic field generators LG1 and LG2. With this design, the sum of the detected (measured) signal at the output of LSB is nearly insensitive to ferro-magnetic objects that may come close from the side onto this sensor arrangement.

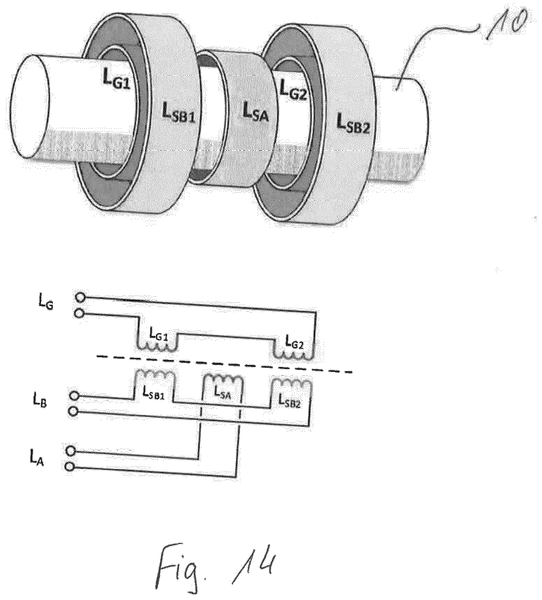

Fig. 14 shows an isometric view of the schematic representation of the force measuring device shown in Fig. 13. It is noted that the casing is not shown in order to better visualize the relative position of the elements of the force measuring device. However, the elements may be arranged in the casing similar to the embodiments shown in Fig. 8 and based on the relative arrangement shown in Fig. 13.

The magnetic field generator coils LG1 and LG2 are powered by an alternating current of a certain frequency. The sensing coil LSA will pick-up the same signal whereby the absolute signal amplitude is subject to the winding relationship LG to LSA.

The coils LSB1 and LSB2 are placed on top of the magnetic field generator coils LG1 and LG2, respectively. The sensing coil LSA is placed right in the middle between the two magnetic field generator coils.

Further, with reference to Fig. 14, exemplary options for mounting the force measuring device described herein may be the following:
In a first option, the force measuring device may be premanufactured. Ring shaped elements of the force measuring device are going 360 degrees around the test object (at the desired sensing location). In this case, it may be necessary to feed one end of the test object (shaft) through the inner circle of the elements of the force measuring device. This may only be possible when at least one end of the test object is not much bigger than the location of the test object where the measurements have to be taken from (sensing region) as the force measuring device has to fit over the shaft end section.

In a second option, the force measuring device may be built directly onto the test object. The coils of the magnetic field generating coils and magnetic field sensing coils may be wound directly around the test object (or onto a casing or holding frame that has been assembled directly at the targeted sensing region of the test object). This option does not require the test object to be fed through the inner centre of the ring-shaped elements of the force measuring device.

### LIST OF REFERENCE SIGNS

- 2: lateral sensor
- 3: air gap
- 4: carrier signal
- 5: modulation range
- 6: measurement range
- 10: test object
- 15: ferro-magnetic object
- 20: torque force
- 50: force measuring device
- 60: control unit
- 61 ,62: demodulator, amplifier
- 63: adder, summer
- 100: magnetic field generating unit (LG1 + LG2)
- 110: first magnetic field generator (LG1)
- 120: second magnetic field generator (LG2)
- 125: flux lines
- 126: angle of the flux lines with respect to central axis
- 130: central axis of the test object
- 132: longitudinal direction of the central axis
- 210: first magnetic field sensing unit (LSA)
- 220: second magnetic field sensing unit (LSB)
- 222: first sensing coil (LSB1)
- 224: second sensing coil (LSB2)
- 226: width (of first and second sensing coil)
- 300: casing
- 310: first radial recess
- 315: separating wall
- 320: second radial recess
- 325: separating wall
- 330: third radial recess

## Claims

1. A force measuring device (50), comprising:
a magnetic field generating unit (100) with a first magnetic field generator (110);
a first magnetic field sensing unit (210);
a second magnetic field sensing unit (220) with a first sensing coil (222); and
a control unit (60) configured to determine a force applied to a test object (10) based on sensed signals of the first magnetic field sensing unit (210) and the second magnetic field sensing unit (220);
wherein the magnetic field generating unit (100) is configured to generate a magnetic field and to apply the magnetic field to a test object (10);
wherein the first magnetic field sensing unit (210) is configured to sense the generated magnetic field and to provide the sensed signal to the control unit;
wherein the first magnetic field generator (110), the first magnetic field sensing unit (210), and the first sensing coil (222) surround a common central axis (130);
wherein the first magnetic field sensing unit (210) is longitudinally offset with regard to the first magnetic field generator (110);
wherein the first sensing coil (222) is wound around the first magnetic field generator (110) such that the first sensing coil (222) and the first magnetic field generator (110) are arranged coaxially with respect to the common central axis (130);
wherein the second magnetic field sensing unit (220) is configured to sense a carrier signal of the magnetic field generating unit (100) and to provide the sensed carrier signal to the control unit (60);
wherein the control unit (60) is configured to subtract the carrier signal sensed by the second magnetic field sensing unit (220) from the signal sensed by the first magnetic field sensing unit (210) for determining the force applied to the test object.

2. The force measuring device (50) of claim 1,
wherein the magnetic field generating unit (100) comprises a second magnetic field generator (120);
wherein the first magnetic field generator (110) and the second magnetic field generator (120) are spaced apart from each other in a longitudinal direction (132) of the central axis (130);
wherein the first magnetic field sensing unit (210) is longitudinally offset with regard to and spaced apart from the second magnetic field generator (120).

3. The force measuring device (50) of claim 2,
wherein the first magnetic field sensing unit (210) is arranged between the first magnetic field generator (110) and the second magnetic field generator (120).

4. The force measuring device (50) of claim 2 or 3:
wherein the second magnetic field sensing unit (220) comprises a second sensing coil (224);
wherein the second sensing coil (224) is wound around the second magnetic field generator (120) such that the second sensing coil (224) and the second magnetic field generator (120) are arranged coaxially with respect to the common central axis (130).

5. The force measuring device (50) of any one of claims 2 to 4,
wherein the first magnetic field generator (110) and the second magnetic field generator (120) are equally designed inductors.

6. The force measuring device (50) of any one of claims 2 to 5,
wherein the first magnetic field generator (110) and the second magnetic field generator (120) are identical coils with their central axes coinciding.

7. The force measuring device (50) of any one of claims 2 to 6,
wherein the first magnetic field generator (110) and the second magnetic field generator (120) are connected in series and are configured to be driven by the control unit (60) with an AC signal.

8. The force measuring device (50) of any one of claims 2 to 7,
wherein the first magnetic field sensing unit (210) is spaced apart equally from the first magnetic field generator (110) and the second magnetic field generator (120).

9. The force measuring device (50) of any one of the preceding claims,
wherein a width of the first sensing coil (222) is equal to a width of the first magnetic field generator (110) such that the first sensing coil (222) completely overlaps or covers the first magnetic field generator (110) without, at the same time, overhanging the first magnetic field generator (110) in longitudinal direction.

10. The force measuring device (50) of any one of the preceding claims,
wherein the first sensing coil (222) is wound onto the first magnetic field generator (110).

11. The force measuring device (50) of any one of the preceding claims,
wherein a number of turns of the second magnetic field sensing unit (220) which is a sum of the turns of its coils, is less than a number of turns of the first magnetic field sensing unit (210).

12. The force measuring device (50) of any one of the preceding claims, further comprising:
a casing (300) with a first radial recess (310), a second radial recess (320), and a third radial recess (330);
wherein the first magnetic field generator (110) is arranged in the first radial recess (310);
wherein the first magnetic field sensing unit (210) is arranged in the second radial recess (320);
wherein the second magnetic field generator (120) is arranged in the third radial recess (330).

13. The force measuring device (50) of claim 12,
wherein the casing comprises an electrically non-conductive material, and/or non-ferromagnetic material, and/or plastics.

14. A force measuring arrangement, comprising:
a test object (10);
a force measuring device (50) of any one of the preceding claims;
wherein the first magnetic field generator (110) and the first magnetic field sensing unit (210) encircle the test object and are spaced apart from a surface of the test object;
wherein the test object is freely rotatable or static in relation to the force measuring device.

15. The force measuring arrangement of claim 14,
wherein the test object is a rotationally symmetric shaft; and
wherein the first magnetic field generator (110) and the first magnetic field sensing unit (210) are spaced apart from the surface of the test object along an entire circumference of the test object.
